# EUROPEAN PATENT APPLICATION

(11) **EP 3 163 538 A1**
(43) Date of publication of application: **03.05.2017**
(21) Application number: 16194720.5
(22) Date of filing: 20.10.2016
(51) Int. Cl.: G07C 9/00, B60R 25/24, B60R 25/40

(54) **ELECTRONIC KEY DEVICE AND ELECTRONIC KEY SYSTEM**

(30) Priority: 29.10.2015 JP 2015213259
(71) Applicant: KABUSHIKI KAISHA TOKAI RIKA DENKI SEISAKUSHO, Niwa-gun, Aichi 480-0195 (JP)
(72) Inventor: JOGO, Naoki, Niwa-gun, Aichi 480-0195 (JP); SENZAKI, Daisuke, Niwa-gun, Aichi 480-0195 (JP); KAWAMURA, Masayuki, Niwa-gun, Aichi 480-0195 (JP); KOJIMA, Hiroaki, Niwa-gun, Aichi 480-0195 (JP)
(74) Representative: TBK

(57) **Abstract**

An electronic key device (2) includes a set information changing unit (22) that changes a map (19) in a memory (18) and alters a transmission power used to transmit a key reply signal (Sac) to non-permissible when the reception unit (15) does not receive the next query signal (Svi) within a predetermined period of time (Tx) from when a transmission unit (16) transmits the key reply signal (Sac).

## Description

The present invention relates to an electronic key device and an electronic key system.

A conventional vehicle electronic key system includes a communication controller installed in a vehicle and a portable electronic key device carried by a user. The communication controller of the vehicle transmits a request signal, which may be an LF (low frequency) band signal, to a communication area located outside or inside the vehicle. The request signal requests for the return of an ID code. When entering the communication area and receiving the request signal, the electronic key device transmits a UHF (ultrahigh frequency) band ID code signal including an ID code of the electronic key device to the vehicle. The communication controller of the vehicle receives the ID code of the electronic key device and performs ID verification. When the ID is verified, the communication controller opens or closes a door lock mechanism of the vehicle (refer to, for example, Japanese Laid-Open Patent Publication No. 2007-217971).

The strength of a request signal received by the electronic key device and the strength of an ID code signal received by the vehicle each are non-stationary and change depending on the distance between the electronic key device and the vehicle. There is a conventional electronic key system that increases the power for transmitting an ID code signal from the electronic key device as the strength of a request signal received by the electronic key device decreases so that the vehicle can receive the ID code signal from the electronic key device. In contrast, the electronic key device decreases the power for transmitting a key reply signal to lower power consumption of the electronic key device as the strength of a request signal received by the electronic key device increases.

The conventional electronic key system determines the transmission power by referring to a non-changeable map or arithmetic function that has been set in advance. For example, whenever the received signal strength is a first received signal strength, the transmission power is set to a first transmission power corresponding to the first received signal strength. Thus, the conventional electronic key system cannot flexibly cope with temporary or dynamic changes in a communication environment. This may result in frequent occurrences in which a signal from the electronic key device fails to reach the vehicle.

This problem is not limited to an electronic key system of a vehicle and may also occur in, for example, an electronic key system for a building that locks and unlocks a door of the building.

It is an object of the present invention to provide an electronic key device and electronic key system that decrease power consumption and are capable of changing the power for transmitting a signal in accordance with the communication environment.

An aspect of the present invention is a portable electronic key device including a reception unit, a transmission unit, a memory, a transmission power setting unit, and a set information changing unit. The reception unit receives a query signal transmitted from a communication subject. The transmission unit transmits a key reply signal in response to the query signal transmitted from the communication subject. The memory stores set information used to select a transmission power of the key reply signal in accordance with a received signal strength of the query signal. The set information indicates whether each of multiple transmission powers is permissible or non-permissible for each received signal strength. The transmission power setting unit refers to the set information of the memory and sets a key reply signal transmission power to a first transmission power that is permissible and is the lowest one of one or more transmission powers corresponding to the received signal strength of the query signal at the reception unit. The set information changing unit changes the set information and alters the first transmission power to non-permissible when the reception unit does not receive the next query signal within a predetermined period of time from when the transmission unit transmits the key reply signal with the key reply signal transmission power.

The electronic key device refers to the set information stored in the memory and transmits a key reply signal with the lowest one of one or more permissible transmission powers associated with the received signal strength. This decreases the power consumption of the electronic key device. Further, when the next query signal is not received within the predetermined period of time from when the key reply signal is transmitted with the first transmission power set by the transmission power setting unit, the set information is changed so that the electronic key device prohibits transmission of the key reply signal with the first transmission power. This allows the electronic key device to dynamically change the set information in accordance with the communication environment. Thus, the electronic key device can cope with changes in the communication environment dynamically or flexibly.

In some implementations, the electronic key device further includes a transmission power resetting unit that refers to the set information stored in the memory when the reception unit does not receive the next query signal within the predetermined period of time and resets the key reply signal transmission power to a second transmission power that is permissible and is the highest one of the one or more transmission powers associated with the received signal strength of the query signal. The transmission unit transmits the key reply signal with the reset key reply signal transmission power.

When the reception unit does not receive the next query signal within the predetermined period of time from when the key reply signal is transmitted, the electronic key device can retransmit the key reply signal with the highest one of the one or more transmission permission powers associated with the received signal strength of the query signal. This increases the probability of the key reply signal reaching the communication subject.

In some implementations, the electronic key device further includes a position measuring unit that measures a current position of the electronic key device. The set information includes multiple data sets, each including multiple data pieces indicating correspondence of multiple received signal strengths and multiple transmission powers, and the memory stores the multiple data sets. The transmission power setting unit is configured to select the data set corresponding to the current position from the multiple data sets based on the current position of the electronic key device measured by the position measuring unit.

The electronic key device is capable of switching the set information in accordance with the position measurement result. Thus, when the communication environment changes because the position of the electronic key device changes, the set information corresponding to the current position of the electronic key device can be used. Accordingly, the transmission power can be changed in accordance with the communication environment.

Another aspect of the present invention is an electronic key system including a communication subject including a control subject device and the electronic key device. The communication subject is configured to transmit the query signal and permit or perform activation of the control subject device when the key reply signal transmitted in response to the query signal is valid.

The present invention provides an electronic key device and electronic key system that decrease power consumption and are capable of changing the power for transmitting a signal in a dynamic or flexible manner in accordance with the environment.
Fig. 1 is a block diagram showing one embodiment of an electronic key system including an electronic key device.
Fig. 2 is a schematic diagram showing a vehicle and a communication area of an LF band radio wave.
Fig. 3 is a table showing an example of a map.
Figs. 4 and 5 are timing charts showing various types of signals of the electronic key system.

One embodiment of an electronic key system will now be described with reference to the drawings.

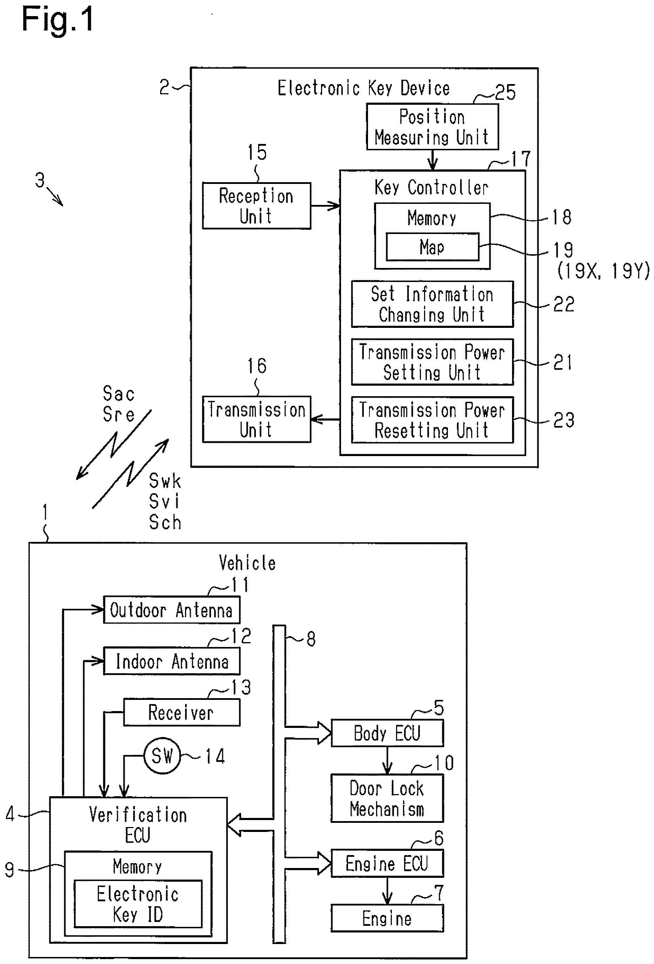

As shown in Fig. 1, an electronic key system 3 is capable of performing wireless communication between a vehicle 1 and an electronic key device 2 and verifies one or more IDs. In a preferred example, the electronic key system 3 is a key-operation-free system that performs short-range communication (for example, communication at a distance of several meters), which starts when a signal is transmitted from the vehicle 1, to perform ID verification.

As shown in Fig. 1, the vehicle 1 includes a verification electronic control unit (ECU) 4 that performs ID verification, a body ECU 5 that manages the power supply of in-vehicle electronic parts, and an engine ECU 6 that controls an engine 7. The ECUs are connected to one another by a vehicle interior bus 8 and may form, for example, a controller area network (CAN) or a local interconnect network (LIN). The verification ECU 4 includes a memory 9 that stores ID codes of one or more electronic key systems registered to the vehicle 1. The body ECU 5 controls a door lock mechanism 10 that locks and unlocks a vehicle door.

As shown in Fig. 1, the vehicle 1 includes an exterior antenna 11 that transmits a query signal to the outside of the vehicle 1, an interior antenna 12 that transmits a query signal to the inside of the vehicle 1, and a receiver 13 that receives a radio wave. In the present embodiment, the query signal transmitted from the vehicle 1 may be a low frequency (LF) band radio wave. Examples of the query signal include a wake signal Swk, a vehicle ID signal Svi, and a challenge signal Sch. The receiver 13 receives a key reply signal that may be an ultrahigh frequency (UHF) band radio wave. Examples of the key reply signal, which is transmitted from the electronic key device 2 in response to the query signal, include an acknowledgement (Ack) signal Sac that is transmitted in response to the wake signal Swk and a response signal Sre that is transmitted in response to the challenge signal Sch. The electronic key system 3 of the present embodiment performs LF-UHF bilateral communication using an LF band radio wave transmitted from the vehicle 1 and a UHF band radio wave transmitted from the electronic key device 2 that reaches a position more distant than the LF radio wave.

As shown in Fig. 1, the vehicle 1 includes an engine switch 14 that may be arranged near a driver seat. The engine switch 14 may be, for example, a button switch of a push momentary type. The vehicle 1 is configured to shift to a power supply state of any one of IG-off, ACC-on, and engine start when the engine switch 14 is operated.

The electronic key device 2 includes a reception unit 15 that receives a radio wave, a transmission unit 16 that transmits a radio wave, and a key controller 17 that controls operation of the electronic key device 2.

The reception unit 15 may include a reception antenna that is capable of receiving a query signal, which may be an LF band radio wave, and a reception circuit that measures the signal strength of the received query signal and demodulates the query signal into a pulse signal.

The transmission unit 16 includes a transmission antenna that transmits a key reply signal, which may be a UHF band radio wave.

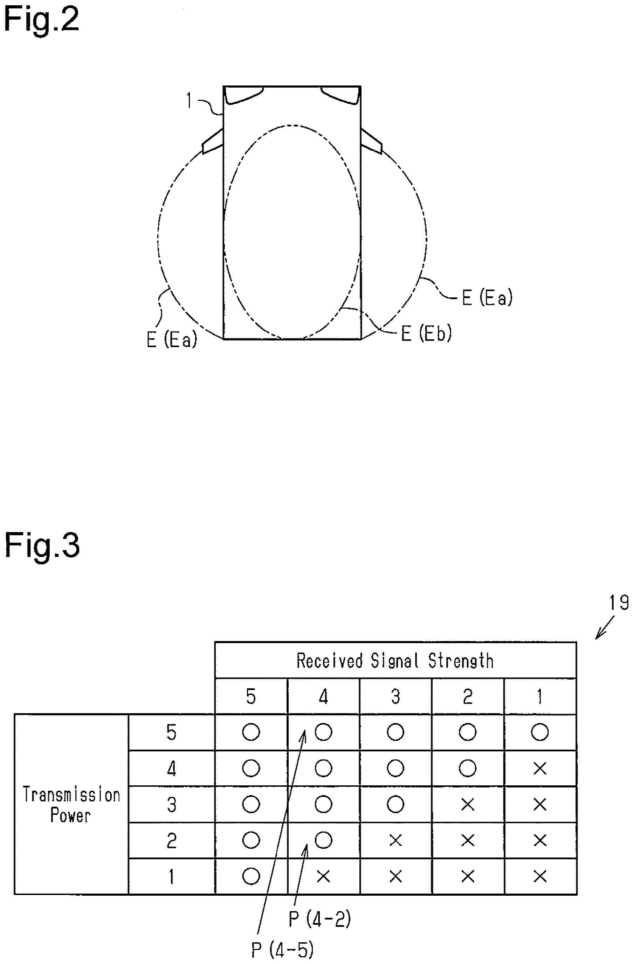

The key controller 17 includes a memory 18 that stores a map 19, or set information. In the map 19, one or more permissible transmission powers and/or one or more non-permissible transmission powers are set in advance for each received signal strength of a query signal received by the reception unit 15. Fig. 3 shows one example of the map 19. The map 19 shown in Fig. 3 may be for an initial (default) state. In Fig. 3, each circle indicates a permissible transmission power, and each cross indicates a non-permissible transmission power. In the present embodiment, the received signal strength and the transmission power are each divided into five levels. In Fig. 3, the five levels are indicated as "1," "2," "3," "4," and "5" that are listed sequentially from the ones of a lower level. For example, when the received signal strength is level 3, the transmission of a key reply signal with a transmission power selected from any one of levels 3 to 5 is permitted and the transmission of a key reply signal with the transmission power of level 1 or 2 is prohibited.

The memory 18 of the key controller 17 may further store an ID code unique to the electronic key device 2 and an encryption key.

As shown in Fig. 1, the key controller 17 includes a transmission power setting unit 21, a set information changing unit 22, and a transmission power resetting unit 23. The transmission power setting unit 21, the set information changing unit 22, and the transmission power resetting unit 23 may be realized by one or more processors.

The transmission power setting unit 21 sets the transmission power of a key reply signal transmitted by the transmission unit 16 based on the signal strength of a query signal received by the reception unit 15 and the map 19 stored in the memory 18.

The set information changing unit 22 is configured to change the map 19. For example, when the reception unit 15 does not receive a vehicle ID signal Svi, which is the next query signal, within a certain or predetermined period of time Tx from when the transmission unit 16 transmits an Ack signal Sac with a first transmission power set by the transmission power setting unit 21, the set information changing unit 22 changes the content of the map 19 in the memory 18 so that the first transmission power set by the transmission power setting unit 21 for the transmission of the preceding Ack signal Sac is set as a transmission non-permission power. The set information changing unit 22 may start measuring the time from when the reception unit 15 receives the preceding query signal and determine whether or not the reception unit 15 has received the next query signal when the measured value exceeds the predetermined period of time Tx.

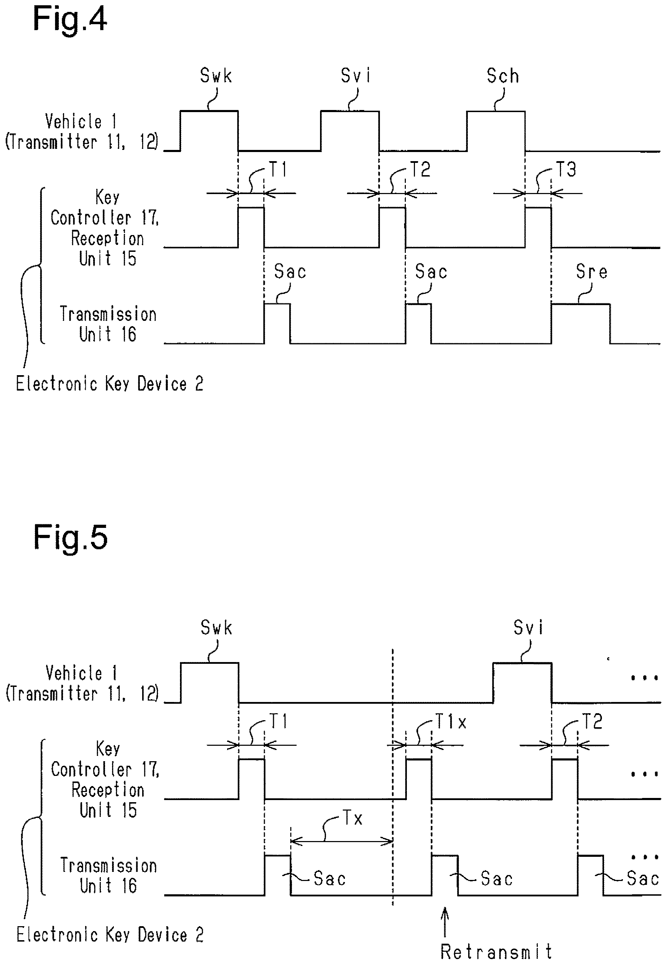

When transmitting an Ack signal Sac with the transmission power set by the transmission power setting unit 21 but being unable to receive the next expected query signal because the query signal was not produced in response to the Ack signal Sac or because the query signal was not transmitted, the transmission power resetting unit 23 sets a transmission power to retransmit the Ack signal Sac. More specifically, when the reception unit 15 does not receive a vehicle ID signal Svi within the predetermined period of time Tx (refer to Fig. 5) from when an Ack signal Sac has been transmitted with the transmission power set by the transmission power setting unit 21, the transmission power resetting unit 23 refers to the map 19 in the memory 18 that has been updated by the set information changing unit 22 and sets (resets) the transmission power for retransmitting the Ack signal Sac to the highest one of the one or more transmission permission powers associated with the strength of the preceding query signal (for example, wake signal Swk) received by the reception unit 15.

The operation of the electronic key system 3 will now be described.

As shown in Fig. 2, the exterior antenna 11 and/or the interior antenna 12 form a LF band radio wave communication area E in which the vehicle 1 and the electronic key device 2 perform ID verification. In the present embodiment, the communication area E includes an exterior communication area Ea of the exterior antenna 11 and an interior communication area Eb of the interior antenna 12. When the electronic key device 2 enters the exterior communication area Ea, ID verification is performed outside the vehicle 1. When the electronic key device 2 enters the interior communication area Eb, ID verification is performed inside the vehicle 1.

As shown in Fig. 4, the vehicle 1 (for example, verification ECU 4) transmits a wake signal Swk that activates the electronic key device 2 from the exterior antenna 11 and/or the interior antenna 12 and determines whether or not the electronic key device 2 has entered the LF band communication area E, which is formed by the exterior antenna 11 and/or the interior antenna 12.

Referring to Fig. 4, when receiving the wake signal Swk, the electronic key device 2 measures the received signal strength, reads the map 19, and sets the transmission power (processing period T1).

For example, the reception unit 15 measures the signal strength of the received wake signal Swk and provides the key controller 17 with a demodulation signal including the measured received signal strength. When the key controller 17 receives the demodulation signal, the transmission power setting unit 21 of the key controller 17 reads the map 19 from the memory 18. Then, the transmission power setting unit 21 determines the transmission power of the Ack signal Sac based on the received signal strength, which is included in the demodulation signal, and the read map 19. For example, when the received signal strength of the wake signal Swk is level 4, the transmission power setting unit 21 refers to the map 19 shown in Fig. 3 and sets the transmission power of the Ack signal Sac to level 2, which is the lowest one of transmission permission power levels 2 to 5 associated with the received signal strength (level 4).

Then, the transmission unit 16 transmits the Ack signal Sac with the transmission power that has been set by the transmission power setting unit 21.

When receiving the Ack signal via the receiver 13 within a predetermined time from when transmitting the wake signal Swk, the verification ECU 4 transmits a vehicle ID signal Svi including a vehicle ID code from the exterior antenna 11 or the interior antenna 12.

Referring to Fig. 4, when receiving the vehicle ID signal Svi, the electronic key device 2 measures the received signal strength, verifies the vehicle ID, reads the map 19, and sets the transmission power (processing period T2). For example, the reception unit 15 measures the signal strength of the received vehicle ID signal Svi and provides the key controller 17 with a demodulation signal including the measured received signal strength.

Then, when receiving the demodulation signal of the vehicle ID signal Svi, the key controller 17 verifies the vehicle ID code included in the demodulation signal with the vehicle ID code in the memory 18 (vehicle ID verification).

When the key controller 17 determines that the vehicle ID code has been verified, the transmission power setting unit 21 of the key controller 17 reads the map 19 from the memory 18. Then, the transmission power setting unit 21 determines the transmission power of the Ack signal Sac based on the received signal strength, which is included in the demodulation signal of the vehicle ID signal Svi, and the read map 19. For example, when the received signal strength of the vehicle ID signal Svi is level 4, the transmission power setting unit 21 refers to the map 19 shown in Fig. 3 and sets the transmission power of the Ack signal Sac to level 2, which is the lowest one of transmission power levels 2 to 5 associated with the received signal strength (level 4). The transmission unit 16 transmits the Ack signal Sac with the transmission power set by the transmission power setting unit 21.

When receiving the Ack signal via the receiver 13 within a predetermined time from when transmitting the vehicle ID signal Svi, the verification ECU 4 transmits a challenge signal Sch including a challenge ID code from the exterior antenna 11 or the interior antenna 12.

Referring to Fig. 4, when receiving the challenge signal Sch, the electronic key device 2 measures the received signal strength, generates a response signal Sre, reads the map 19, and sets the transmission power (processing period T3). For example, the reception unit 15 measures the signal strength of the received challenge signal Sch and provides the key controller 17 with a demodulation signal including the measured received signal strength. When receiving the demodulation signal of the challenge signal Sch, the key controller 17 encrypts the challenge ID code included in the demodulation signal using an encryption key stored in the memory 18 to generate a response code. The key controller 17 generates a response signal Sre including the generated response code and the ID code stored in the memory 18.

The transmission power setting unit 21 of the key controller 17 reads the map 19 from the memory 18 and sets the transmission power of the response signal Sre based on the map 19 and the received signal strength included in the demodulation signal of the challenge signal Sch. For example, when the received signal strength of the challenge signal Sch is level 4, the transmission power setting unit 21 refers to the map 19 shown in Fig. 3 and sets the transmission power of the response signal Sre to level 2, which is the lowest one of transmission power levels 2 to 5 associated with the received signal strength (level 4). The transmission unit 16 transmits the response signal Sre with the transmission power set by the transmission power setting unit 21.

Then, when receiving the response signal Sre via the receiver 13, the verification ECU 4 verifies the ID code included in the response signal Sre with a key ID code stored in the memory 18 (ID verification). Further, the verification ECU 4 verifies the response code included in the response signal Sre with a response code generated by the verification ECU 4 (response verification). When determining that the ID verification and the response verification have succeeded, the verification ECU 4 shifts to a verification completion state. For example, when the electronic key device 2 shifts to the verification completion state in the exterior communication area Ea, the verification ECU 4 allows the body ECU 5 to lock or unlock the vehicle door. For example, when the electronic key device 2 shifts to the verification completion state in the interior communication area Eb, the verification ECU 4 enables the vehicle power supply state to be changed when the engine switch 14 is operated.

In the electronic key system 3 of the present embodiment, when the electronic key device 2 transmits an Ack signal Sac in response to a wake signal Swk, the vehicle 1 may not receive the Ack signal Sac within a predetermined time due to insufficient transmission power of the Ack signal Sac or the influence of external noise. In this case, the vehicle 1 will not transmit a vehicle ID signal Svi, which is the next query signal.

The example of Fig. 5 will now be described with reference to the map 19 shown in Fig. 3. The reception unit 15 receives a query signal (for example, wake signal Swk) having a first received signal strength (level 4), the transmission power setting unit 21 sets the first transmission power (level 2) corresponding to the first received signal strength (level 4) (processing period T1), and the transmission unit 16 transmits a key reply signal (for example, Ack signal Sac) with the first transmission power (level 2). However, the reception unit 15 does not receive the next query signal (for example, vehicle ID signal Svi) that is expected to be received within the predetermined period of time Tx. This indicates the probability that the preceding Ack signal Sac has not reached the vehicle 1. When the key controller 17 determines that the reception unit 15 has not received the next query signal, the set information changing unit 22 of the electronic key device 2 changes the content of the map 19. Further, the transmission power resetting unit 23 refers to the changed map 19 and resets the transmission power of the Ack signal Sac (processing period T1x).

For example, when the transmission power set during the preceding processing period T1 is level 2, the set information changing unit 22 changes the circle (valid) to a cross (invalid) that is marked in cell P (4-2) in the map 19 corresponding to the preceding received signal strength (level 4) and the preceding transmission power (level 2). This updates the map 19. Thus, transmission power level 2 of cell P (4-2) is changed to a non-permissible transmission power. In the map 19, the cells other than cell P (4-2) are not changed. In the updated map 19, the permissible transmission powers corresponding to the received signal strength level 4 are level 3, level 4, and level 5 respectively corresponding to cell P (4-3), cell P (4-4), and cell P (4-5).

Each cell of the map 19 may be referred to as a data piece that indicates the correspondence between the received signal strength and the transmission power. The map 19 may be referred to as a data set including multiple data pieces.

To increase the probability of the retransmitted Ack signal Sac reaching the vehicle 1, the transmission power resetting unit 23 refers to the updated map 19 and resets the transmission power for retransmitting the Ack signal Sac to level 5 (cell P (4-5)), which is the highest one of the transmission permission powers associated with received signal strength level 4 of the wake signal Swk. Then, the transmission unit 16 transmits (retransmits) the Ack signal Sac with the reset transmission power (level 5). Such a dynamic change in the transmission power decreases situations in which successive key reply signals from the electronic key device 2 do not reach the vehicle 1. When the received signal strength is not level 4, the content of the map 19 and the transmission power is dynamically changed in the same manner.

The present embodiment has the advantages described below.
(1) The electronic key device 2 refers to the map 19 stored in the memory 18 and transmits a key reply signal with the lowest one of one or more permissible transmission powers associated with the received signal strength of a query signal. Thus, the power consumption of the electronic key device 2 is lower than that of a referential example in which a key reply signal is constantly transmitted with the highest transmission power. This extends the battery life of the electronic key device 2 and decreases the frequency of battery replacement.
   Further, when the electronic key device 2 does not receive the next query signal (for example, vehicle ID signal Svi) within the predetermined period of time Tx from when transmitting a key reply signal (for example, Ack signal Sac) with the transmission power set by the transmission power setting unit 21, the electronic key device 2 changes the map 19 and sets the transmission power used for transmission of the preceding key reply signal to a non-permissible transmission power. In such a manner, the map 19 (set information) can be changed dynamically in accordance with changes in the communication environment.
(2) When the reception unit 15 does not receive the next query signal (vehicle ID signal Svi) within the predetermined period of time Tx from when the electronic key device 2 transmits a key reply signal (Ack signal Sac), the key reply signal (Ack signal Sac) is transmitted (retransmitted) with the highest one of the permissible transmission powers. This increases situations in which the Ack signal Sac (key reply signal) reaches the vehicle 1 and decreases situations in which successive key reply signals from the electronic key device 2 do not reach the vehicle 1.

The embodiment may be modified as follows.

As shown in Fig. 1, the electronic key device 2 may include a position measuring unit 25 that measures the current position of the electronic key device 2. The position measuring unit 25 may include a global positioning system (GPS) receiver. The key controller 17 may be configured to receive the position measurement result obtained by the position measuring unit 25 and relate (associate) the position measurement result with the map 19. For example, the memory 18 of the key controller 17 is configured to store multiple maps 19 respectively corresponding to multiple positions measured by the position measuring unit 25. For example, the memory 18 may store copies of the map 19. The memory 18 may store, for example, multiple maps including a map 19X corresponding to position X and a map 19Y corresponding to positon Y that differs from position X. The phrase "position Y that differs from position X" indicates that the measurement result of position X obtained by the position measuring unit 25 at a first timing greatly differs from the measurement result of position Y obtained by the position measuring unit 25 at a second timing, which differs from the first timing, even when taking into account errors in the position measuring unit 25 (GPS) and the tolerance that allows for the specification and the like of the electronic key system 3.

The transmission power setting unit 21 and the transmission power resetting unit 23 of the key controller 17 select one of the multiple maps 19 (19X and 19Y) saved in the memory 18 in accordance with the measurement result measured by the position measuring unit 25, that is, the current position of the electronic key device 2. The maps 19 (19X and 19Y) can be switched in accordance with the current position of the electronic key device 2. When the communication environment changes because the position of the electronic key device 2 changes, the map 19 (19X or 19Y) corresponding to the current position of the electronic key device 2 can be used to change the transmission power in accordance with the communication environment.

The position measuring unit 25 may be arranged in the vehicle 1. For example, the current position of the vehicle 1 measured by the position measuring unit 25 of the vehicle 1 may be included in a query signal (for example, wake signal Swk). The current position of the electronic key device 2 where the query signal can be received is substantially the same as the current position of the vehicle 1. This allows the transmission power setting unit 21, the set information changing unit 22, and the transmission power resetting unit 23 of the electronic key device 2 to use the map selected in accordance with the current position of the vehicle 1 and/or the electronic key device 2. Further, since the position measuring unit 25 is omitted from the electronic key device 2, the power consumption of the electronic key device 2 is reduced accordingly. The position measuring unit 25 of the vehicle 1 may be a GPS receiver installed in, for example, a car navigation system.

In addition, one or both of the vehicle 1 and the electronic key device 2 may include a real time clock that obtains the current time (day, date, and the like). The current time obtained by the real time clock and the current position measured by the position measuring unit 25 may be related to the multiple maps in the memory 18.

In the above embodiment, the number of the levels of received signal strength and transmission power in the map 19 is five but may be changed in accordance with the specification or the like.

The electronic key device 2 normally includes a replaceable battery. The map 19 may be initialized or returned to an initial state when the battery is replaced and power-on resetting is automatically or manually performed. In this case, the memory 18 may store an initial map and an updating map that is independent from the initial map and initialize the maps by overwriting the initial map with the updating map or storing a copy of the initial map as the updating map.

Map initialization may be performed when successive key reply signals are transmitted a predetermined number of times with the maximum power (level 5). Alternatively, the transmission power of each key reply signal may be converted to a numeral and be cumulated to perform initialization when the cumulated value becomes equal to a predetermined value or greater.

The communication subject of the electronic key device 2 is not limited to the vehicle 1 and may be, for example, a building door or a controller that controls locking and unlocking of a building door.

The electronic key system 3 may use communication formats and/or radio wave frequencies that differ from those of the embodiment.

The present invention encompasses the following implementations.

[Implementation 1] An electronic key device (2) including: a reception unit (15); a transmission unit (16); one or more processors (21, 22, 23); and a memory (18) that stores a data set (19) including multiple data pieces that indicate a corresponding relationship of multiple received signal strengths and multiple transmission powers, wherein the one or more processors (21, 22, 23) are configured to:
select, when the electronic key device (2) receives a first query signal (Swk) having a first received signal strength, a first transmission power indicated by a first data piece (P (4-2)) corresponding to the first received signal strength from the data set (19);
update, when the transmission unit (16) of the electronic key device (2) transmits a key reply signal (e.g., Ack signal Sac) with the first transmission power in response to the first query signal (Swk) but the reception unit (15) of the electronic key device (2) does not receive a second query signal (e.g., vehicle ID signal Svi) in response to the key reply signal (e.g., Ack signal Sac) within a predetermined period of time (Tx), the data set (19) in the memory (18) by invalidating the first data piece (P (4-2));
refer to the updated data set (19) and select a second transmission power indicated by a second data piece (P (4-5)) corresponding to the first received signal strength of the first query signal (Swk); and
retransmit the key reply signal in response to the first query signal (Swk) from the transmission unit (16) of the electronic key device (2) with the second transmission power.
[Implementation 2] The electronic key device according to implementation 1, wherein the first transmission power is the lowest one (P (4-2)) of multiple permissible transmission powers corresponding to the first received signal strength in the data set (19), and the second transmission power is the highest one (P (4-5)) of multiple permissible transmission powers corresponding to the first received signal strength in the updated data set (19).

It should be apparent to those skilled in the art that the present invention may be embodied in many other specific forms without departing from the scope of the invention. For example, one or more of the components may be omitted from the components described in the embodiments (or one or more aspects thereof). Further, components in different embodiments may be appropriately combined.

An electronic key device (2) includes a set information changing unit (22) that changes a map (19) in a memory (18) and alters a transmission power used to transmit a key reply signal (Sac) to non-permissible when the reception unit (15) does not receive the next query signal (Svi) within a predetermined period of time (Tx) from when a transmission unit (16) transmits the key reply signal (Sac).

## Claims

1. An electronic key device (2) comprising:
a reception unit (15) that receives a query signal (Swk) transmitted from a communication subject (1);
a transmission unit (16) that transmits a key reply signal (Sac) in response to the query signal (Swk) transmitted from the communication subject (1);
a memory (18) that stores set information (19) used to select a transmission power of the key reply signal (Sac) in accordance with a received signal strength of the query signal (Swk), wherein the set information (19) indicates whether each of multiple transmission powers is permissible or non-permissible for each received signal strength;
a transmission power setting unit (21) that refers to the set information (19) of the memory (18) and sets a key reply signal transmission power to a first transmission power that is permissible and is the lowest one of one or more transmission powers corresponding to the received signal strength of the query signal (Swk) at the reception unit (15); and
a set information changing unit (22) that changes the set information (19) and alters the first transmission power to non-permissible when the reception unit (15) does not receive the next query signal (Svi) within a predetermined period of time (Tx) from when the transmission unit (16) transmits the key reply signal (Sac) with the key reply signal transmission power.

2. The electronic key device (2) according to claim 1, further comprising:
a transmission power resetting unit (23) that refers to the set information (19) stored in the memory (18) when the reception unit (15) does not receive the next query signal (Svi) within the predetermined period of time (Tx) and resets the key reply signal transmission power to a second transmission power that is permissible and is the highest one of the one or more transmission powers associated with the received signal strength of the query signal (Swk), wherein
the transmission unit (16) transmits the key reply signal (Sac) with the reset key reply signal transmission power.

3. The electronic key device (2) according to claim 1 or 2, further comprising:
a position measuring unit (25) that measures a current position of the electronic key device (2), wherein
the set information (19) includes multiple data sets (19X, 19Y), each including multiple data pieces indicating correspondence of multiple received signal strengths and multiple transmission powers, and the memory (18) stores the multiple data sets (19X, 19Y), and
the transmission power setting unit (21) is configured to select the data set (19X) corresponding to the current position from the multiple data sets (19X, 19Y) based on the current position of the electronic key device (2) measured by the position measuring unit (25).

4. An electronic key system (3) comprising:
a communication subject (1) including a control subject device; and
the electronic key device (2) according to any one of claims 1 to 3, wherein
the communication subject (1) is configured to transmit the query signal (Swk) and permit or perform activation of the control subject device when the key reply signal (Sac) transmitted in response to the query signal (Swk) is valid.
